# EUROPÄISCHE PATENTANMELDUNG

(11) **EP 2 199 531 A2**
(43) Veröffentlichungstag der Anmeldung: **23.06.2010**
(21) Anmeldenummer: 09177448.9
(22) Anmeldetag: 30.11.2009
(51) Int. Cl.: E21B 10/44

(54) **Bohrkopf für Gesteinsbohrer**

(30) Priorität: 18.12.2008 DE 102008054869
(71) Anmelder: HILTI Aktiengesellschaft, 9494 Schaan (LI)
(72) Erfinder: Wetter, Christoph, 6800, Feldkirch (AT); Foser, Roland, 9494, Schaan (LI); Schneider, Jens, 6800, Feldkirch (AT); Meierhofer, Markus, 9472, Grabs (CH)

(57) **Zusammenfassung**

Gegenstand der vorliegenden Erfindung ist ein sich entlang einer Bohrachse (A) erstreckender Bohrkopf (10) aus Hartmetall für Gesteinsbohrer. Der Bohrkopf (10) weist wenigstens eine Hauptschneide (11) sowie wenigstens eine Nebenschneide (12) auf, wobei sich die Hauptschneide (11) von einem ersten radial innen liegenden Ende (16) zu einem ersten radial aussen liegenden Ende (17) erstreckt, das auf einem ersten Durchmesser (D1) liegt, und wobei sich die Nebenschneide (12) von einem zweiten radial innen liegenden Ende (18) zu einem zweiten radial aussen liegenden Ende (19) erstreckt, das auf einem zweiten Durchmesser (D2) liegt, der kleiner als der erste Durchmesser (D1) ist. Eine durch die Nebenschneide (12) definierte erste Hüllfläche (H1) überragt dabei vollständig eine durch die Hauptschneide (11) definierte zweite Hüllfläche (H2) axial.

## Beschreibung

Die vorliegende Erfindung betrifft einen Bohrkopf der im Oberbegriff von Patentanspruch 1 genannten Art.

Derartige Bohrköpfe für Gesteinsbohrer weisen Schneiden aus einem Schneidwerkstoff, vorzugsweise aus einem Hartmetall, auf und sind z. B. als Vollhartmetall- oder als mehrteilig aufgebaute Bohrköpfe ausgebildet. Unter Hartmetall werden dabei im vorliegenden Fall gesinterte oder geschmolzene Karbide, Silicide, Boride oder deren Legierungen verstanden.

Die mit einem Bohrkopf bestückten Gesteinsbohrer werden üblicherweise in Verbindung mit axialschlagunterstützten Drehbohrgeräten, insbesondere handgeführten Bohrgeräten, eingesetzt und in der Regel für die drehschlagende Erstellung von Bohrungen oder Durchbrüchen in Beton oder Mauerwerk verwendet. Die axialen Schläge werden auf das in die Werkzeugaufnahme des Bohrgeräts eingesetzte Schaftende des Gesteinsbohrers abgegeben und über den Schaft sowie den Bohrkopf in den zu bearbeitenden Untergrund eingeleitet. Auf diese Weise wird der Untergrund schabend und meisselnd bearbeitet sowie chipweise abgebaut. Neben den hohen Anforderungen hinsichtlich des erzielbaren Bohrfortschritts und des erforderlichen Kraftaufwands sollen die Gesteinsbohrer auch eine möglichst hohe Standzeit aufweisen.

Aus der DE 197 24 373 A1 ist ein Gesteinsbohrer bekannt, der einen Bohrerschaft mit wenigstens einer wendelförmig entlang seiner Längserstreckung verlaufenden Abfuhrnut für abgetragenes Bohrgut bekannt. Der Gesteinsbohrer weist ferner einen gesamthaft aus Hartmetall bestehenden Bohrkopf auf, der mit dem Stirnende des Bohrerschafts verbunden ist. Der Bohrkopf weist eine Hauptschneide sowie wenigstens eine Nebenschneide auf, die jeweils entlang von Diagonalen des Bohrkopfes angeordnet sind. Die Hauptschneide erstreckt sich in radialer Richtung bis zu einem ersten Durchmesser, während sich die Nebenschneide in radialer Richtung bis zu einem zweiten Durchmesser erstreckt, der kleiner ist als der erste Durchmesser. Die Nebenschneide überragt dabei den peripheren Bereich der Hauptschneide axial.

Beim Bohren auf einem Armierungseisen trägt im Wesentlichen nur die Hauptschneide das Armierungseisen ab und verrichtet somit einen Grossteil der Abtragsleistung, was zu einer hohen Schneidenbelastung führt.

Aufgabe der vorliegenden Erfindung ist es daher, einen Bohrkopf für Gesteinsbohrer zu schaffen, bei dem der Spanabtrag optimiert ist und der eine höhere Bohrgeschwindigkeit auf Armierungseisen ermöglicht.

Die Aufgabe wird durch einen Bohrkopf mit den in Patentanspruch 1 genannten Merkmalen gelöst. Demnach sind die Nebenschneide und die durchmesserbestimmende Hauptschneide so am Bohrkopf angeordnet, dass eine Hüllfläche der Nebenschneide eine Hüllfläche der Hauptschneide vollständig axial überragt (durchmesserbestimmend heisst dabei, dass die Hauptschneide den Durchmesser einer mit dem Bohrer erzeugten Bohrung bestimmt). Durch diese Massnahme wird im Betrieb des Bohrers der Abtrag eines gegebenenfalls angebohrten Armierungseisens auf alle Schneiden verteilt. Die Nebenschneide trägt dabei einen Teil des Armierungseisens ab, die Hauptschneide den Rest.

Ausserdem haben Versuche gezeigt, dass ein Bohrer mit einem erfindungsgemässen Bohrkopf bei einem Armierungseisentreffer nicht mehr seitlich abdriftet bzw. verläuft, so dass Dübel auch in Bohrlöchern mit Armierungseisentreffer leicht eingesetzt werden können. Ferner weist der Bohrkopf eine reduzierte Neigung zum Verhaken an Armierungseisen auf.

In einer vorteilhaften Ausführungsform der Erfindung weist der Bohrkopf genau zwei Hauptschneiden und zwei Nebenschneiden auf, wodurch das Spanverhalten weiter verbessert wird.

Ein weiter optimiertes Spanverhalten ergibt sich, wenn die wenigstens eine Hauptschneide im rechten Winkel zu der wenigstens einen Nebenschneide verläuft.

Vorteilhaft verlaufen die wenigstens eine Hauptschneide sowie die wenigstens eine Nebenschneide jeweils linear.

In den Zeichnungen ist die Erfindung in einem Ausführungsbeispiel dargestellt.

Es zeigen:
- Fig. 1: einen erfindungsgemässen Bohrkopf in einer ersten Seitenansicht,
- Fig. 2: den Bohrkopf aus Fig. 1 in Aufsicht,
- Fig. 3: den Bohrkopf aus Fig. 1 in einer zweiten Seitenansicht,
- Fig. 4: den Bohrkopf aus Fig. 1 in einer perspektivischen Ansicht.

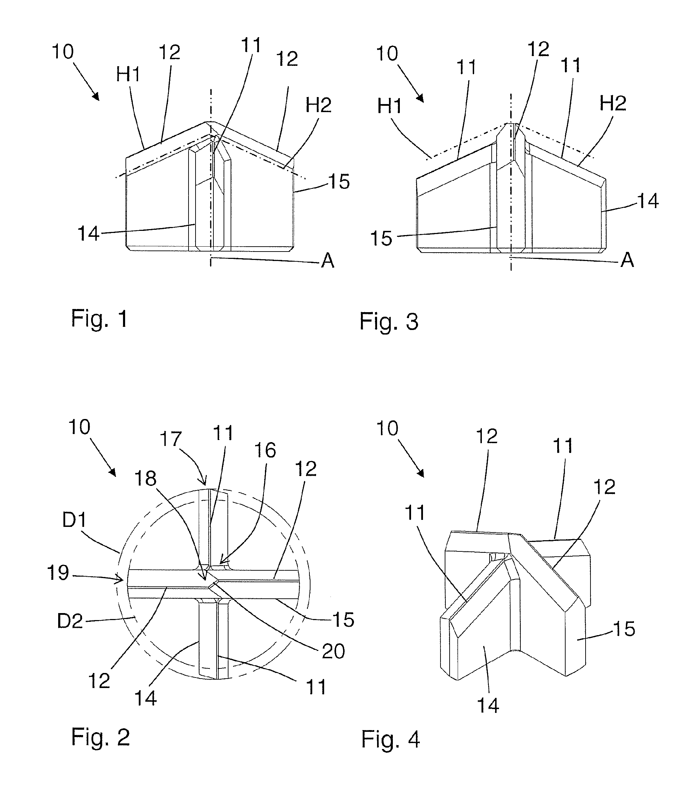

In den Figuren 1 bis 4 ist ein erfindungsgemässer, sich entlang einer Bohrachse A erstreckender Bohrkopf 10 für Gesteinbohrer wiedergegeben, der als Hartmetallkopf ausgeführt ist und der zwei Hauptschneiden 11 sowie zwei Nebenschneiden 12 aufweist. Die Hauptschneiden 11 und die Nebenschneiden 12 sind dabei an zwei sich im rechten Winkel kreuzenden Schneidplatten 14, 15 angeordnet. Alternativ könnte der Bohrkopf auch als so genannter Vollhartmetallkopf ausgebildet sein, der z. B. stumpf auf einen Bohrerschaft (in den Figuren nicht dargestellt) aufgelötet wird. Der dargestellte Hartmetallkopf hingegen wird in entsprechende kreuzförmig angeordnete Nuten am Ende des Bohrerschafts (in den Figuren nicht dargestellt) eingesteckt und darin verlötet. Die Hauptschneiden 11 erstrecken sich von einem ersten radial innen liegenden Ende 16 zu einem ersten radial aussen liegenden Ende 17. Das erste radial aussen liegende Ende 17 liegt dabei auf einem ersten Durchmesser D1. Die Nebenschneide 12 erstreckt sich hingegen von einem zweiten radial innen liegenden Ende 18 zu einem zweiten radial aussen liegenden Ende 19. Dieses zweite radial aussen liegende Ende 19 liegt dabei auf einem zweiten Durchmesser D2, der kleiner als der erste Durchmesser D1 ist. Die Hauptschneide 11 bestimmt daher den Durchmesser eines mit dem Bohrkopf 10 erzeugten Bohrkanals.

Die Nebenschneiden 12 definieren eine erste Hüllfläche H1, die eine durch die Hauptschneiden definierte zweite Hüllfläche H2 vollständig axial überragen. Die Hüllflächen H1, H2 sind dabei die Flächen, die bei einer Rotation der Nebenschneiden 12 respektive der Hauptschneiden 11 um die Achse A von diesen aufgespannt werden. In den Figuren 1 und 3 sind dabei jeweils die Spuren der Hüllflächen H1, H2 als strichpunktierte Linien angedeutet.

Wie insbesondere Figur 2 zu entnehmen ist, liegen die Hauptschneiden 11 jeweils im rechten Winkel zu den Nebenschneiden 12. Die Hauptschneiden 11 und die Nebenschneiden 12 verlaufen im dargestellten Ausführungsbeispiel linear. Alternativ könnten Sie aber auch jeweils ein- oder mehrfach gekrümmt sein. Die beiden Hauptschneiden 11 sind im Bereich der Spitze 13 des Bohrkopfs 10 über eine Querschneide 20 miteinander verbunden. In einer alternativen Ausführungsform könnte eine solche Querschneide auch entfallen.

## Patentansprüche

1. Bohrkopf aus Hartmetall für Gesteinsbohrer, der sich entlang einer Bohrachse (A) erstreckt, der wenigstens eine Hauptschneide (11) sowie wenigstens eine Nebenschneide (12) aufweist, wobei sich die Hauptschneide (11) von einem ersten radial innen liegenden Ende (16) zu einem ersten radial aussen liegenden Ende (17) erstreckt, das auf einem ersten Durchmesser (D1) liegt, und wobei sich die Nebenschneide (12) von einem zweiten radial innen liegenden Ende (18) zu einem zweiten radial aussen liegenden Ende (19) erstreckt, das auf einem zweiten Durchmesser (D2) liegt, der kleiner als der erste Durchmesser (D1) ist,
**dadurch gekennzeichnet,**
**dass** eine Hüllfläche (H1) der Nebenschneide (12) eine Hüllfläche (H2) der Hauptschneide (11) vollständig axial überragt.

2. Bohrkopf nach Anspruch 1, **gekennzeichnet durch** zwei Hauptschneiden (11) und zwei Nebenschneiden (12).

3. Bohrkopf nach Anspruch 1 oder 2, **dadurch gekennzeichnet, dass** die wenigstens eine Hauptschneide (11) im rechten Winkel zu der wenigstens einen Nebenschneide (12) verläuft.

4. Bohrkopf nach einem der Ansprüche 1 bis 3, **dadurch gekennzeichnet, dass** die wenigstens eine Hauptschneide (11) sowie die wenigstens eine Nebenschneide (12) jeweils linear verlaufen.
